# EUROPEAN PATENT SPECIFICATION

(11) **EP 1 672 245 B1**
(45) Date of publication and mention of the grant of the patent: **05.03.2014**
(21) Application number: 04030104.6
(22) Date of filing: 20.12.2004
(51) Int. Cl.: F16G 5/16

(54) **Assembled driving belt**
Zusammengesetzter Treibriemen
Courroie de transmission assemblée

(43) Date of publication of application: 21.06.2006
(73) Proprietor: ROBERT BOSCH GMBH, 70442 Stuttgart (DE)
(72) Inventor: Feijtel, Jasper, 3319EV Dordrecht (NL)
(74) Representative: Plevier, Gabriel Anton Johan Maria

(56) References cited:
- EP-A- 0 562 654
- US-A1- 2002 183 152
- US-B1- 6 440 024
- PATENT ABSTRACTS OF JAPAN vol. 1999, no. 09, 30 July 1999 (1999-07-30) -& JP 11 108123 A (NISSAN MOTOR CO LTD), 20 April 1999 (1999-04-20)
- PATENT ABSTRACTS OF JAPAN vol. 2002, no. 04, 4 August 2002 (2002-08-04) -& JP 2001 355682 A (NISSAN MOTOR CO LTD), 26 December 2001 (2001-12-26)

## Description

The present invention relates to an assembled driving belt for a continuously variable transmission, as described in the preamble of claim 1 below. Such driving belts are generally known, for example from European patent application EP-A-0 522 612 in the name of the applicant. Such driving belts comprise a large number of - normally several hundred- of relatively rigid transverse elements, usually made entirely of metal, which are likewise generally known per se and which are accommodated in the driving belt so that they are movable along an endless, i.e. ring shaped, endless tension element that is relatively flexible at least in its longitudinal direction. In the above example, the tension element comprises two parts, each of which is formed by a number of -usually 9 to 12- thin, flat metal rings accommodated around one another and each accommodated in a lateral, i.e. axially oriented, opening of the transverse element.

The known driving belt is used in a transmission, in particular for driving relatively heavy vehicles, such as a motor car or a lorry, and for this purpose is accommodated in predominantly V-shaped grooves defined between the discs of a primary, generally driving pulley and between the discs of a secondary, generally driven pulley. By a mutually relative axial movement of the discs of a pulley, a clamping force may be exerted on the driving belt and/or its radial position between such discs may be varied.

During use, the driving belt is subjected to a driving force by the primary pulley, which force is transmitted from the pulley to the belt through friction between the largely conical shaped working surface of each of the pulley discs and a respective pulley contact surface or flank on either side of the transverse elements. Hereby, a tension force is effected in the tension element and a pushing force is effected between the transverse elements, propelling the elements towards the other, here the secondary pulley, while being guided by the tension element. At the other pulley, such forces are transmitted from the driving belt to the respective pulley discs, whereby the pulley is rotationally driven.

In the known driving belt the flanks of the transverse elements in the height direction are defined essentially straight, however, effectively mutually diverging, i.e. radially outward with respect to the driving belt as a whole, whereby the angle of divergence essentially matches that of the of the pulley V-grooves. The flanks are situated on the lateral, i.e. axial sides of a so-called body part of the transverse element, which is situated below or -viewed in the radial direction- inside the tension element and which forms an underside of the above-mentioned openings. A generally arrowhead-shaped head part of the transverse element forms a topside of the openings. Situated between the openings is a so-called neck part of the transverse element that connects the body part and the head part to each other. On a front main face of the transverse element, the head part is provided with a centrally positioned projection, which can be accommodated in a hole provided centrally on a rear main face of the head part of an adjacent transverse element.

The function of the projection and hole of the transverse elements is a/o to prevent the displacement of adjacent transverse elements in the driving belt relative to each other in a virtual plane oriented parallel to the said main faces of the element, i.e. essentially perpendicular to the longitudinal direction of the belt. Such a displacement could, in particular, occur where the driving belt is wedged between the pulley discs and results in a tilting of the transverse element relative to the radial and/or axial directions.

The above-mentioned radial tilting can be explained by the presence of an imbalance in the magnitude and the radial points of application of the forces acting upon the transverse element in the tangential direction, which direction substantially coincides with the longitudinal direction of the driving belt when clamped between the pulley discs. These forces are namely at least a friction force prevailing between the pulley discs and the flanks of the body part, which friction force has an effective point of application approximately halfway along the radial dimension of the flanks, a relatively low internal friction force between the tension element and the transverse element, which friction force acts upon a tension element supporting surface of the body part at the radial position of the above-mentioned underside of the axially oriented openings, i.e. essentially at the radially outer end of the flanks, and pushing forces prevailing between the individual transverse elements, which pushing forces act upon the front and rear main face at the radial position of an axially oriented tilting line provided on the front main face of the elements. The tilting line is provided to allow adjacent transverse elements to tilt in relation to each other and defines a transition between an upper part of the element of certain thickness and a lower, thinner part of the element. Generally, such tilting line is provided slightly radially inward form the said supporting surfaces of the element, extending between the flanks thereof.

As a result of the above-mentioned imbalance, the transverse element acquires the tendency to tilt, whereby the front and rear main faces of adjacent elements would have to slide over each other. This sliding would be at the expense of the efficiency of the power transmission and there would also be a risk of damage to the driving belt and/or the pulleys. However, by the presence of the projection and the hole complementary to it by means of which the adjacent transverse elements are engaged and relative sliding can be largely avoided.

Still, this known solution also has a number of disadvantages. For instance, the projection and the hole are subject to wear during use of the driving belt, as a result of which it can fail with the passage of time. In addition, the projection must be provided with a sufficient transverse dimension (e.g. diameter) and, moreover, must be sufficiently far removed from the edges of the transverse element, in order to achieve a sufficient strength of the transverse element, both during manufacture and during use in the driving belt. Furthermore, the projection and the hole have to be made with extremely great accuracy during manufacture, in order to effectively limit the said sliding.

An alternative solution is known from the European patent application EP-A-1 221 563 and involves lowering the radial position of the tilting line in the radial direction to (essentially) coincide with the effective point of application of the friction force between the transverse element and the pulley. However, in such a design a difference in speed in the longitudinal direction between the tension element and the transverse elements will be greater, and consequently also the above-mentioned internal friction. Hereby, the efficiency of the transmission in which the driving belt is being used will be adversely effected. Besides, it can be expected that the increasingly unequal distribution of the mass of the transverse element above and below the tilting line will in turn adversely affect a desired movement and orientation of the transverse element during operation.

Yet an alternative solution is known from the United States patent US-A-2002/0183152, which involves influencing the radial position of the effective point of application of the friction force between the transverse element and the pulley to (essentially) coincide with the radial position of the tilting line, by providing the element's flanks with a convex shape, thereby effectively creating a point contact there between. However, in such a design a contact pressure between the elements and the discs is significantly increased, whereby an increased wear of the driving belt and the pulleys can be a problem. Besides, in such design the natural resistance against tiling of the conventional element providing more or less a line contact with the pulley discs is surrendered.

In order largely to avoid the above-mentioned limitations and disadvantages of the known solutions, the invention proposes the driving belt according to claim 1. According to the invention, each flank of the elements is recessed, i.e. shaped concavely, along the height direction of the element and relative to a straight tangent line of the flank, such that both when the element is oriented essentially radially between the discs of a pulley and when it is tilted backwards during use it remains in contact with each of the pulley discs at two radially spaced contact points on the flanks. Hereby, the element has a relatively large resistance against such tilting and, moreover, such resistance is retained in an already tilted position thereof.

Preferably, the concave shape is set such that it closely follows, i.e. fits, a convexely curved contour of the respective pulley disc in a pre-defined slightly tilted orientation. Because the pulley contour varies in dependence on a radial position R thereon, the element flanks can only provide a line contact, i.e. exactly fit the pulley contour, at the smallest possible value Rmin of the radial position R, while providing two radially spaced contact points at the other, i.e. larger values of the radial position R that may occur during use.

The present invention provides the advantages of a relatively large resistance of the transverse elements against tilting relative to both the radial direction and the axial direction, whereby the load on the projection is reduced. Also, a stiffness of the transverse elements is increased such that it is able to resist a higher clamping force without buckling and, moreover, the elements will arriving into contact with, i.e. will be taken up by the pulley discs in the inclined position, which favourably reduces the noise level associated therewith.

Preferably, in a more detailed embodiment of the transverse element, its supporting surface is oriented at an acute angle relative to the main faces of the element. Hereby, when the tension element engages the supporting surface of the element where it is clamped between the pulley discs, it will be aligned essentially in parallel with the tension element and its main faces will accordingly be inclined relative to the radial direction, which feature thus supports the desired tilted orientation of the element.

The invention will now be explained in greater detail with reference to the drawing, in which corresponding structural parts are indicated by the same reference numerals.
Figure 1 is a diagrammatic view of a known transmission incorporating a driving belt wound around two pulleys of the transmission;
Figure 2 is longitudinal cross-sectional view of the known driving belt of figure 1, showing the transverse elements and the endless tension element thereof;
Figure 3 is a front elevation of a first embodiment of the transverse element component of the driving belt according to the invention;
Figure 4 is a side elevation of a section of the driving belt provided with transverse elements according to the first embodiment of figure 3; and
Figure 5 is a front elevation of a second embodiment of the transverse element component of the driving belt according to the invention

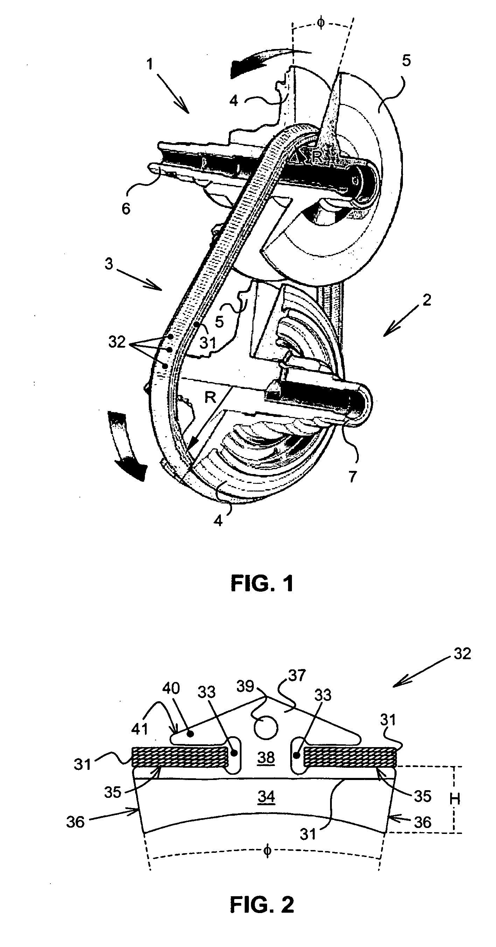

Figure 1 shows the central parts of a continuously variable transmission as is used in the drive of, for example, passenger cars. The transmission per se is generally known and comprises a drive or primary pulley 1 on a primary shaft 6 and driven or secondary pulley 2 on a secondary shaft 7, each pulley 1, 2 comprising two frustoconical pulley discs 4, 5 between which there is located a driving belt 3. At least one disc 4 of a pulley 1, 2 can be displaced in the axial direction along a respective axle 6, 7 on which the discs 4, 5 are mounted to narrow, respectively widen a V-shaped groove, which is defined between these discs 4, 5, for radially displacing the driving belt 3 and/or for exerting a clamping force thereon and a driving force may be transmitted between the driving belt 3 and the pulleys 1, 2 by means of friction.

The known drive belt 3 of figure 1, which is shown in more detail in the cross-section of figure 2, comprises a number of relatively thin transverse elements 32 and an endless tension element 31, which, in this example, consists of two parts, each formed by a number of thin, flat rings nested around one another and each part being accommodated in an opening 33 of the transverse elements 32 so that the elements 32 are movable along the circumference of the tension element 31.

The transverse element 32 comprises a body part 34, which is situated below or -viewed in the radial direction- inside the tension element 31 and forms a bottom side of the openings 33. A generally arrowhead-shaped head part 37 of the transverse element 32 forms a topside of the openings 33. Situated between the openings 33 is a so-called neck part 38 of the transverse element 32 that connects the body part 34 and the head part 37 to each other. The body part 34 comprises supporting surfaces 35 for supporting both parts of the tension element 31 and on either lateral side thereof a predominantly axially oriented side face 36 or flank 36. The flanks 36 are shaped as essentially straight, however, mutually diverging in the height direction H of the element 32, i.e. radially outward with respect to the driving belt 3 as a whole, whereby the angle of divergence φ matches that of the of the pulley V-grooves (see figure 1).

The known driving belt 3 arrives into frictional contact with the conical working surfaces of the pulley discs 4, 5 through these flanks 36, essentially providing a line contact between the pulley discs 4, 5 and the elements 32 when the latter are radially aligned. However, such frictional contact will often be reduced to essentially a point contact when the elements 32 assume a radially tilted position, which offers only little resistance against further tilting. To prevent such -further- tilting, a projection 39 is provided on a front main 40 face of the transverse element essentially centrally on the head part 37, which projection 40 can be accommodated in a hole (not visible) provided on a rear main face 41 of the head part 37 of an adjacent transverse element 32. Hereby a displacement by mutual sliding of adjacent transverse elements in the driving belt 3 and thus a radial tilting thereof is limited.

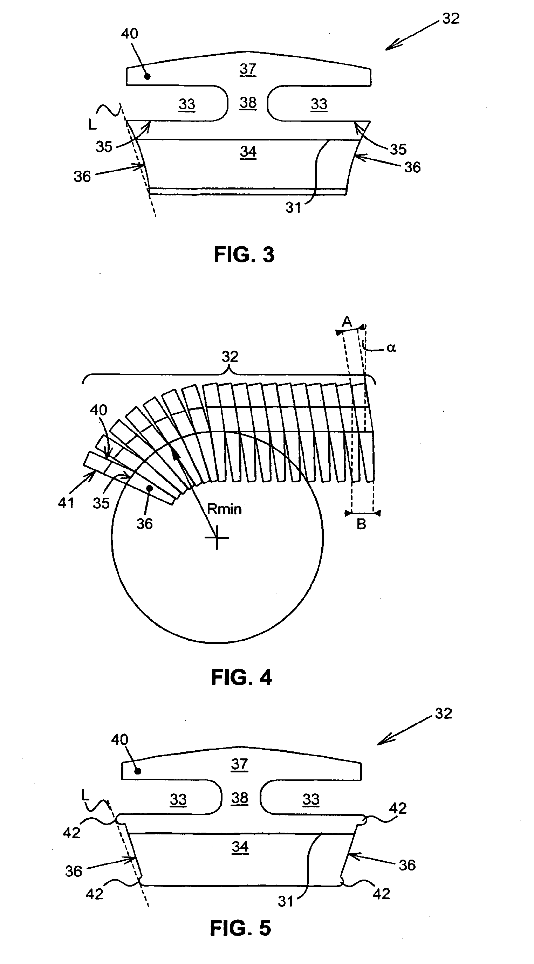

To overcome, at least mitigate, disadvantages in manufacturing and in use that are associated with the provision of the projection 39 and hole, the present invention provides for an alternative design of the drive belt 3, in particular of the transverse element 32 component thereof. According to a first embodiment of the element 32 according to the invention, which is illustrated in the front elevation of figure 3, the flanks 36 of the elements 32 in the height direction are shaped at least slightly concavely. Such concave shape being defined relative to a straight tangent line L of the flank 36. Thus, even where the element 32 is tilted backwards between the discs 4, 5 of a pulley 1, 2 during use, it remains in contact with each of the pulley discs 4, 5 at least at two radially spaced contact points on its respective flanks 36. Hereby, the element 32 retains a relatively large resistance against tilting, irrespective of its orientation relative to the radial direction.

Preferably, the concave contour of the flank 36 is set such that it closely follows a convexely curved contour of the respective pulley disc 4, 5 in a pre-defined slightly tilted orientation at an angle α relative to the radial direction, such that the elements 32 assume such orientation in a stable manner. This is indicated in the figure 4 by means of a side elevation of several elements 32, some of which are in a mutually tilted relationship and some of which are mutually aligned. In this example the concave curvature of the flanks 36 is set such that a line contact may be established with the pulley discs 4, 5 at the smallest radial position Rmin of the driving belt 3 that occurs during use. Preferably, also the supporting surface 35 is oriented at the same angle α relative to the main faces 40, 41 of the element 32. Hereby, a normal force between the tension element 31 and the elements 32 that prevails during use promotes and stabilises the desired slightly radially tilted orientation of the elements 32.

The present invention provides the advantages of a relatively large resistance of the transverse elements 32 against -further- tilting relative to both the radial direction and the axial direction, whereby the load on the projection 39 is reduced. Ideally, the projection 39 and hole may even be omitted, as is the case in the embodiments shown here. Further, because the effective thickness B of the elements 32 has increased relative to their real thickness A, the transverse elements 32 show an increased stiffness.

Figure 5 shows a front elevation of the elements 32 in a second embodiment according to the invention. In this second embodiment too, the flanks 36 of the body part 34 are provided with a recessed shape as defined relative to a straight tangent line L of the flanks 36 in the height direction. In this embodiment such concave shape is, however, not realised by a smoothly concavely curved contour of the flank 36, but rather by providing a protrusion 42 at or near both radial ends of the body part 34.

Apart from what is described above, the invention also relates to all the details in the figures, at least in so far as such details can be immediately and unequivocally deduced by a person skilled in the art, but the invention is defined by the following set of claims.

## Claims

1. Driving belt (3) for a continuously variable transmission provided with an endless tension element (31) and with a number of transverse elements (32) that are movable in a longitudinal direction along the tension element (31), whereby the tension element (31) is accommodated in an opening (33) of the transverse elements (32), which transverse elements (32) comprise a body part (34) with a flank (36) situated on either axial side thereof for arriving into frictional contact with a working surface of a pulley (1, 2) of the transmission, which flanks (36) extend over the thickness (A) of the element (32) as measured in the longitudinal direction of the belt (3) and over the height (H) of the body part (34) as measured in the radial direction of the belt (3), **characterised in that** at or near both ends of the body part (34), as seen in the height direction thereof, the flanks (36) are provided with an axially extending protrusion (42), whereby each flank (36) is recessed into the body part of the transverse element relative to a straight tangent line (L) of the respective flank (36) that is oriented along the height (H) of the body part (34) and that touches the flank (36) at the protrusions thereof, such that both when the element (32) is oriented essentially radially between two discs of a pulley of the transmission and when it is tilted backwards relative thereto during use of the transmission, it remains in contact with each of the pulley discs at the two radially spaced protrusions on the flanks (36).

2. Driving belt (3) according to claim 1, **characterised in that** an underside of the opening (33) of the elements (32) is at least partly formed by a tension element supporting surface (35) of the body part (34), whereby the supporting surface (35) is oriented at an acute angle with the front and rear main face (40, 41) of the respective element (32).

## Patentansprüche

1. Treibriemen (3) für ein stufenloses Getriebe, der mit einem Endlosspannelement (31) und mit einer Anzahl von Querelementen (32), die in einer Längsrichtung entlang dem Spannelement (31) bewegbar sind, versehen ist, wobei das Spannelement (31) in einer Öffnung (33) der Querelemente (32) aufgenommen ist, wobei die Querelemente (32) einen Körperteil (34) mit einer Flanke (36) auf jeder axialen Seite davon zum Eintreten in Reibkontakt mit einer Arbeitsfläche einer Rolle (1, 2) des Getriebes umfassen, wobei sich die Flanken (36) über die in der Längsrichtung des Riemens (3) gemessene Dicke (A) des Elements (32) und über die in der Radialrichtung des Riemens (3) gemessene Höhe (H) des Körperteils (34) erstrecken, **dadurch gekennzeichnet, dass** die Flanken (36) an den oder in der Nähe der beiden Enden des Körperteils (34), in der Höhenrichtung davon betrachtet, mit einem sich axial erstreckenden Vorsprung (42) versehen sind, wobei jede Flanke (36) in den Körperteil des Querelements bezüglich einer geraden Tangente (L) der jeweiligen Flanke (36), die entlang der Höhe (H) des Körperteils (34) ausgerichtet ist und die Flanke (36) an den Vorsprüngen davon berührt vertieft ist, so dass das Element (32) sowohl bei einer im Wesentlichen radialen Ausrichtung zwischen zwei Scheiben einer Rolle des Getriebes als auch bei einer Neigung nach hinten bezüglich dazu während der Verwendung des Getriebes, mit jeder der Rollenscheiben an den beiden radial beabstandeten Vorsprüngen an den Flanken (36) in Kontakt bleibt.

2. Treibriemen (3) nach Anspruch 1, **dadurch gekennzeichnet, dass** eine Unterseite der Öffnung (33) der Elemente (32) zumindest teilweise durch eine Spannelementstützfläche (35) des Körperteils (34) gebildet wird, wobei die Stützfläche (35) in einem spitzen Winkel mit der vorderen und hinteren Hauptfläche (40, 41) des jeweiligen Elements (32) ausgerichtet ist.

## Revendications

1. Courroie de transmission (3) pour une transmission à variation continue dotée d'un élément de tension sans fin (31) et d'un certain nombre d'éléments transversaux (32) mobiles dans une direction longitudinale le long de l'élément de tension (31), l'élément de tension (31) étant logé dans une ouverture (33) des éléments transversaux (32), lesdits éléments transversaux (32) comprenant une partie corps (34) comportant un flanc (36) situé de chaque côté axial de celle-ci et destiné à venir en contact par frottement avec une surface travaillante d'une poulie (1, 2) de la transmission, lesdits flancs (36) s'étendant sur l'épaisseur (A) de l'élément (32) telle que mesurée dans la direction longitudinale de la courroie (3) et sur la hauteur (H) de la partie corps (34) telle que mesurée dans le sens radial de la courroie (3), **caractérisée en ce qu'**au niveau des deux extrémités de la partie corps (34), telle qu'observée dans le sens de sa hauteur, ou à proximité de celles-ci, les flancs (36) sont dotés d'une protubérance (42) s'étendant axialement, chaque flanc (36) étant ainsi en renfoncement dans la partie corps de l'élément transversal par rapport à une ligne droite tangente (L) du flanc respectif (36) qui est orientée le long de la hauteur (H) de la partie corps (34) et qui touche le flanc (36) au niveau de ses protubérances, de telle sorte qu'à la fois lorsque l'élément (32) est orienté essentiellement radialement entre deux disques d'une poulie de la transmission et lorsqu'il est incliné vers l'arrière par rapport à cette position lors de l'utilisation de la transmission, il reste en contact avec chacun des disques de poulie au niveau des deux protubérances espacées radialement sur les flancs (36).

2. Courroie de transmission (3) selon la revendication 1, **caractérisée en ce qu'**un côté inférieur de l'ouverture (33) des éléments (32) est au moins partiellement formé par une surface de support (35) d'élément de tension de la partie corps (34), la surface de support (35) étant orientée à un angle aigu par rapport aux faces principales avant et arrière (40, 41) de l'élément respectif (32).
